# EUROPEAN PATENT APPLICATION

(11) **EP 3 679 801 A1**
(43) Date of publication of application: **15.07.2020**
(21) Application number: 19218141.0
(22) Date of filing: 19.12.2019
(51) Int. Cl.: A22C 17/00

(54) **SKEWER MACHINE**

(30) Priority: 10.01.2019 IT 201900000358
(71) Applicant: Fava s.n.c. di Adele Turetta & c., 43126 Parma (IT)
(72) Inventor: FAVA, Antonio, 43123 Parma (IT)
(74) Representative: Corradini, Corrado

(57) **Abstract**

A skewer machine (10) for the production of skewers (S) is described, comprising: a plurality of forming trays (15) of the skewers (S) each provided with a housing seat (20) of a skewer (S), and an extraction station (95) of the skewers (S). Where said extraction station (95) is adapted to extract the skewers (S) from the respective housing grooves (20) of the forming trays (15) and comprises: an abutment element (105, 110) and an operating device (100) of the abutment element (105, 110) configured to vertically move the abutment element between a first position in which it does not interfere with the skewer (S) in the housing seat (20), and a second position in which it directly comes into contact with said skewer (S) in such a manner whereby in the passage from the first position to the second position, the abutment element (105, 110) comes into contact with and extracts the skewer (S) from the housing seat (20).

## Description

### TECHNICAL FIELD

The present invention relates to an automated skewer machine, in particular a skewer machine provided with an automated extraction station.

### EXISTING TECHNIQUE

Skewer machines generally comprise a conveyor belt to which there are secured a plurality of trays for forming the skewers, which one or more operators provide to fill with the ingredients forming the skewer. Such machines provide a station for forming the skewer in which a wooden or metal spit is inserted through the ingredients to keep them in position.

With respect to the overall processing flow, the skewer machines, which are downstream of the skewer forming station, are provided with a station for extracting the skewers adapted to extract the skewers from the forming trays to place them on a table or a conveyor belt, from which the operators provide to pick the ready skewers to position them in containers.

A problem of the known solutions is due to the configuration normally implemented by the extraction station, which provides one or more fixed slides which act on end portions of the spits while these are dragged together with the respective trays along the conveyor belt. In particular, such slides are tilted with respect to the trajectory followed by the skewers, in such a manner that by continuing in the translation with the conveyor belt, the spit slides on the slide, causing the skewer to be raised from the forming tray.

This configuration has the drawback that under certain conditions, the spits may bend or break, thus preventing the extraction of the skewer from the forming tray, which results in the successive need to stop the machine and manually extract the skewer.

In other machines, the products end up unsorted by gravity on the receiving belts due to the overturning of the forming moulds or due to the action of intermediate chain belts.

It is an object of the present invention therefore to make available an automated skewer machine provided with a more efficient extraction station with respect to the ones of the prior art.

Such object is achieved by the features of the invention indicated in the independent claim. The dependent claims outline preferred and/or particularly advantageous aspects of the invention.

### DESCRIPTION OF THE INVENTION

Particularly, to resolve said problems of the prior art, the invention makes available a skewer machine comprising:
- a plurality of forming trays of the skewers each provided with a housing seat of a skewer, and
- an extraction station of the skewers adapted to extract the skewers from the respective housing grooves of the forming trays and comprising:
   ∘ an abutment element, and
   ∘ an operating device of the abutment element configured to vertically move the abutment element between a first position in which it does not interfere with the skewer in the housing seat, and a second position in which it directly comes into contact with said skewer in such a manner whereby in the passage from the first position to the second position, the abutment element comes into contact with and extracts the skewer from the housing seat.

Due to such solution, an automated skewer machine is made available, provided with an extraction station of the skewers from the forming trays which always ensures the complete extraction of the skewers from the respective housing grooves.

For example, in the second position, the abutment element supports the extracted skewer at the bottom.

In this manner, the stability of the skewer is kept and it is ensured to have the skewer in a predetermined position after the extraction thereof, thus making the successive moving/picking simpler.

According to another aspect of the invention, the abutment element may comprise a pair of rods arranged with longitudinal axes transversal to a longitudinal axis of the housing seat.

In this manner, the abutment element is only slightly invasive, easy to clean and the fact of having two rods allows always being in contact with the product in two non-adjacent points in such a manner as to avoid rotations of the skewers during the movement. According to another aspect again of the invention, each forming tray of the skewers may comprise a pair of extraction grooves which cross the housing seat along a direction which is transverse to the longitudinal axis of the housing seat and in which there are at least partially positioned the rods of the pair of rods when the abutment element is in the first position.

In this way, the system is particularly compact, in addition to the fact that in this manner, the abutment element may directly insist on the pieces of ingredients rather than on the wooden spits.

Another aspect of the invention provides for the skewer machine to comprise a conveyor of the forming trays, and for such conveyor to comprise a stretch in which the trays are caused to advance while keeping them with the housing seat of the skewer with concavity facing downwards, and in which the extraction station is configured to remove the skewers from the forming trays in said stretch.

Due to such solution, the extraction of the skewers is facilitated due to the force of gravity, which also allows implementing an actuator of the abutment element having contained power, and therefore contained costs, and increased speeds.

A further aspect of the invention provides for the abutment element to comprise a further pair of rods arranged with longitudinal axes transversal to the longitudinal axis of the housing seat, which are at a lower height than the rods of the pair of rods and are configured to support the skewer at the bottom at least when the abutment element passes from the first position to the second position.

In this manner, the products are kept sorted to promote the successive movement, the products are prevented from falling and the use of two rods ensures contact with the skewer in two separate parts, thus avoiding rotations during the movement, which could result in the falling of the skewer from the abutment element.

Furthermore, the extraction station may comprise a pusher device configured to remove the skewer resting on the rods of the further pair of rods when the abutment element is in the second position.

The use of a pusher element reduces the possibility of accumulations of dirt, and therefore increased hygiene of the skewer machine with respect to other movement systems.

According to another aspect of the invention, the forming tray conveyor may comprise a first stretch in which the trays are with the housing seat with concavity facing upwards, a second stretch in which the trays are with the housing seat with concavity facing downwards, and a reversing stretch interposed between the first stretch and the second stretch, and in which the extraction station comprises a guide placed at the reversing stretch and configured to prevent the skewers from completely coming out of the housing grooves.

Due to this solution, the skewer machine is particularly compact and efficient.

According to another aspect again of the invention, the guide may comprise a pair of curvilinear elements which follow the trajectory defined by the forming trays in the movement by the forming tray conveyor and are positioned laterally and externally to the housing grooves of the forming trays.

In this way, the guides directly act on the spits of the possible skewers coming out in the reversing stretch and not on the pieces of ingredients of the skewers, thus reducing the possibility for such guides to become dirty and therefore reducing the cleaning interventions to maintain the hygiene thereof.

According to a further aspect of the invention, the skewer machine may comprise an automated sorting station of the skewers, which is placed downstream of the extraction station of the skewers and is adapted to sort the skewers and to position the sorted skewers directly in containers, and in which the pusher device is configured to move the skewer from the abutment element of the extraction station to a conveyor of the sorting station. In this manner, the transfer of the skewers from one station to another may be particularly quick, functional and not require operators and/or warehouses for accumulating the extracted skewers.

Another aspect again of the invention provides for the sorting station of the skewers to be provided with a first conveyor, a second conveyor and a third conveyor, placed in series one after the other and each provided with respective independent mechanically-operated systems for sorting the skewers and positioning them in the containers.

Due to such solution, it is ensured for the skewers to reach the containers always correctly sorted and in the right predetermined number. Moreover, the invention allows forming groups of skewers having a different number of skewers without the need to make structural modifications to the machine.

An aspect of the invention provides for the third conveyor to translate horizontally above a container in which to introduce the skewers.

In this manner, it is possible to place the skewers in the containers, thus ensuring they remain sorted and compact during movement.

Another aspect of the invention provides for the translation of the third conveyor to occur along a direction parallel to a transport direction of the skewers on the third conveyor itself, which transport direction is transverse to a longitudinal axis of the skewers of the group of skewers.

In this way, it is possible to place the skewers in a container stopped below the third conveyor, i.e. there is no need to move said tray during the placement of the products, thus reducing synchronization errors between moving parts.

According to another aspect again of the invention, the second conveyor may be placed at a higher height than the third conveyor and always be partially superimposed in plan thereto during the translation thereof.

In this manner, the sorting station is particularly fast in forming the groups of skewers and placing them in the containers because the translation of the third conveyor does not affect the transfer of the groups of skewers from the second belt to the third belt.

In one embodiment, the sorting station may also comprise an automated gripper configured to rotate the groups of sorted skewers on the third conveyor.

Due to such solution, it is possible to place the groups of skewers in the movement trays whatever the orientation of such trays downstream of the third conveyor because the gripper allows the orientation of the skewers on the third conveyor to be simply and effectively varied to adapt it to the orientation of the containers. The gripper may also ensure a further compaction, or adjustment of the compaction, of the groups of skewers when they are on the third conveyor.

The sorting station may also comprise a fourth conveyor which defines an advancement direction of the groups of skewers which is transverse to an advancement direction of the group of skewers defined by the third conveyor, and is interposed between the third conveyor and the container in which to place the groups of skewers.

In this manner, it is possible to further improve the positioning and sorting accuracy of the products in the step of placing the skewers from the third conveyor to the containers because the skewers do not fall entirely and immediately into the container during the operation, rather they initially come into contact with said tray with a longitudinal end while they are still supported by the fourth conveyor.

As a further guarantee of a perfect sorting and compaction of the groups of skewers, the machine may provide a compaction unit which is configured to compact the groups of skewers on the fourth conveyor and is provided with a pair of walls, of which at least one wall movable in direction towards and away from the other wall.

Another aspect of the invention provides for the skewer machine to comprise a conveyor of the containers, which defines a transport direction of the containers which is transverse to a transport direction of the groups of skewers defined by the third conveyor.

In this manner, it is possible to automate the positioning of the containers in which to introduce the groups of skewers at the third conveyor, thus avoiding problems of incorrect alignment or even failed positioning of the container.

Moreover, the invention makes available a method for positioning skewers in containers by means of the skewer machine described above, comprising a step of grouping the skewers into groups formed by a predetermined number of skewers, said step in turn comprising the steps of:
- operating the first conveyor to move the skewers towards the second conveyor and to bring the skewers on the first conveyor at an edge of the first conveyor adjacent to the second conveyor,
- operating the first conveyor and the second conveyor in the same transport direction, at the same speed and for a predetermined time interval sufficient to place, on the second conveyor, the skewers which were previously positioned at the edge of the first conveyor adjacent to the second conveyor, in position immediately adjacent to the edge of the first conveyor close to the second conveyor.

Due to such solution, a method is made available which allows a group of skewers to be quickly formed and sorted by means of two conveyors.

Furthermore, the invention makes available a method for positioning skewers in containers by means of the skewer machine described above, comprising a step of placing a group of skewers in a predetermined container, said placement step comprising the sub-steps of: operating the third conveyor to bring the group of skewers at an edge of the third conveyor distal from the second conveyor and then a sub-step of translating the third conveyor above the predetermined container in which to place the group of skewers, and simultaneously operating the third conveyor to move the group of skewers in a transport direction towards the predetermined container.

In this way, it is possible to quickly and accurately place the skewers in the trays, thus ensuring the operation is performed while keeping the skewers sorted and compacted.

### BRIEF DESCRIPTION OF THE DRAWINGS

Further features and advantages of the invention will be more apparent after reading the following description provided by way of a non-limiting example, with the aid of the accompanying drawings.
Figure 1 is an axonometric view of a skewer machine according to the invention.
Figure 2 is a partial and simplified enlargement of the skewer machine in figure 1.
Figure 3 is a rear axonometric view of the portion of skewer machine shown in figure 2.
Figure 4 is a partial side view of the skewer machine in figure 1.
Figure 5 is a side view of the portion of skewer machine shown in figure 3.
Figures 6 to 15 diagrammatically show the operation of an extraction station and of a sorting station of the skewer machine by showing chronological successive steps of the processing of the skewers.
Figure 16 is an axonometric view of an embodiment of the skewer machine which is alternative to the embodiment shown in figures 1 to 5.
Figure 17 is an axonometric view of an embodiment of the skewer machine which is alternative to the embodiments shown in figures 1 to 5 and 16.
Figure 18 is an axonometric view of an embodiment of the skewer machine which is alternative to the embodiments shown in figures 1 to 5, 16 and 17.
Figure 19 is an axonometric view of forming tray of each embodiment of the skewer machine shown.
Figure 20 is a front view of the forming tray in figure 19.
Figure 21 is a side view of the forming tray in figure 19.

### DETAILED DESCRIPTION

With particular reference to such drawings, a skewer machine for making skewers S of various types, for example meat, fish, vegetable, fruit and mixed skewers, is shown as a whole with 10. It is worth noting that skewer S means a food product formed by one or more pieces of ingredients skewered by a spit, which preferably is made of wood.

The skewer machine 10 comprises a plurality of trays 15 for forming the skewers in which one or more operators of the skewer machine 10 introduce the pieces of ingredients forming the skewers S.

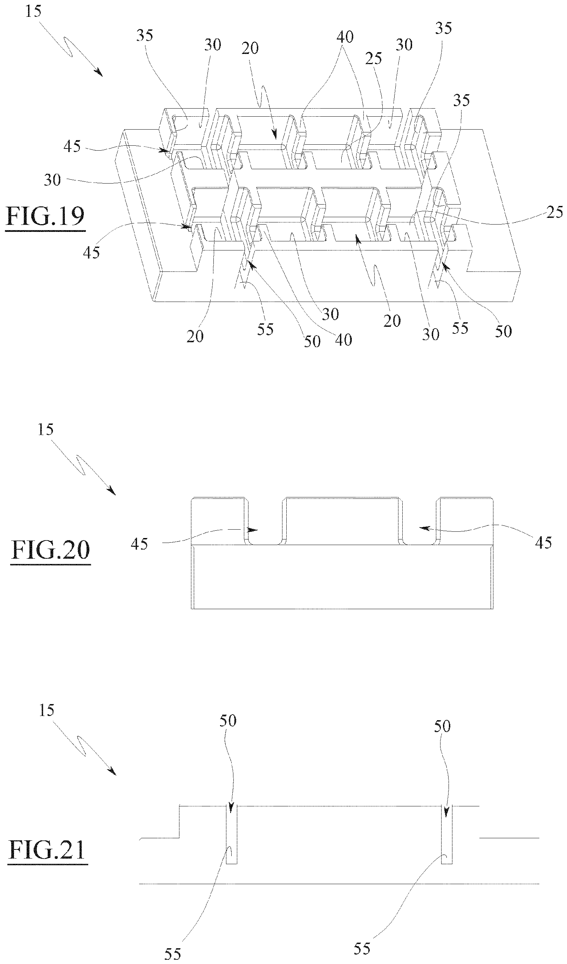

With particular reference to figures 19 to 21, each forming tray 15 comprises a seat 20 for housing a skewer S, shaped in such a manner whereby the skewer S is received in the housing seat 20 with a longitudinal axis substantially parallel to a longitudinal axis of the housing seat itself.

Each forming tray 15 preferably has two housing grooves 20 so that each forming tray 15 may form and contain two skewers S.

Each housing seat 20 has a bottom wall 25 from which four substantially vertical walls rise, two-by-two opposed to each other. In particular, each housing seat 20 comprises two first opposed walls 30, which substantially are parallel to the longitudinal axis of the housing seat 20, and two second walls 35, which substantially are transverse to said longitudinal axis.

The bottom wall 25 is for example, flat.

Each housing seat 20 comprises one or more partition walls 40 which divide a volume of the housing seat 20 into several sub-volumes, for example such walls are transverse to the longitudinal axis of the housing seat 20.

Moreover, each forming tray 15 comprises a channel 45 for housing the spit, which entirely crosses a respective housing seat 20.

The housing channel 45 of the spit S has a longitudinal axis which substantially is parallel to the longitudinal axis of the housing seat 20, i.e. to the longitudinal axis of the spit S.

Each housing channel 45 of the spit crosses the second walls 35 of the housing seat 20 from one side to the other, for example also the partition walls 40 of the housing seat 20. When the concavity of the housing seat 20 is facing upwards, each housing channel 45 is entirely at a higher height than the bottom wall 25 of the housing seat 20. Furthermore, each forming tray 15 comprises a groove 50 for extracting the skewers, for example two skewer extraction grooves 50.

Each extraction groove 50 entirely crosses the housing seat 20 in transverse direction, for example perpendicular direction, to the longitudinal axis of the housing groove itself. For example, each extraction groove 50 of the skewers S completely crosses the first walls 30 of the housing seat 20, preferably each extraction groove 50 entirely crosses both the housing grooves 20 and the relative first walls 25.

In practice, each extraction groove 50 is made like a blind milling which entirely crosses the forming tray 15, transversely to the longitudinal axes of the housing seat 20.

Each extraction groove 50 has a bottom wall 55 placed at a different height than the height of the bottom wall 25 of the housing seat 20.

For example, the bottom wall 55 of the extraction groove 50 is at least 10 mm, preferably at least 20 mm, from the bottom wall 25 of the housing seat 20.

Furthermore, the extraction groove 50 may be made in an area of the forming tray 15 which is barycentric with respect to the skewer S to be housed in the housing seat 20. When the concavity of the housing seat 20 is facing upwards, each extraction groove 50 is at a lower height than the bottom wall 25 of the housing seat 20.

In particular, when the concavity of the housing groove 20 is facing upwards, the bottom wall 55 of the extraction groove 50 is entirely at a lower height than the bottom wall 25 of the housing seat 20.

When the concavity of the housing groove 20 is facing downwards, each extraction groove 50 is at a higher height than the bottom wall 25 of the housing seat 20.

In particular, when the concavity of the housing groove 20 is facing downwards, the bottom wall 55 of the extraction groove 50 is entirely at a higher height than the bottom wall 25 of the housing seat 20.

Said bottom wall 55 is for example, flat, preferably lying on the plane parallel to a lying plane of the bottom wall 25 of the housing seat 20.

Each extraction groove 50 has width in direction of the longitudinal axis of the housing seat 20 which is less than the width of the housing seat 20 in direction perpendicular to the longitudinal axis of the housing groove itself.

Each extraction groove 50 of each forming tray 15 is orthogonal to the housing channel 45, for example to both the housing channels 45, of the same forming tray, i.e. it is orthogonal to the housing seat 20, for example to both the housing grooves 20, of the same forming tray.

Each extraction groove 50 of each forming tray 15 has concavity facing in a direction which is concordant to the concavity of each housing seat 20 of the same forming tray 15.

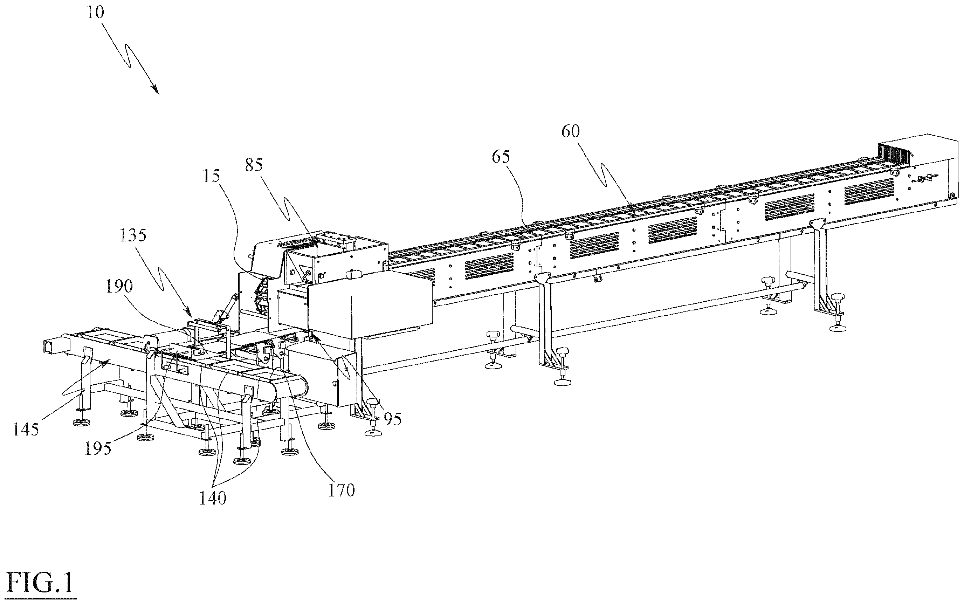

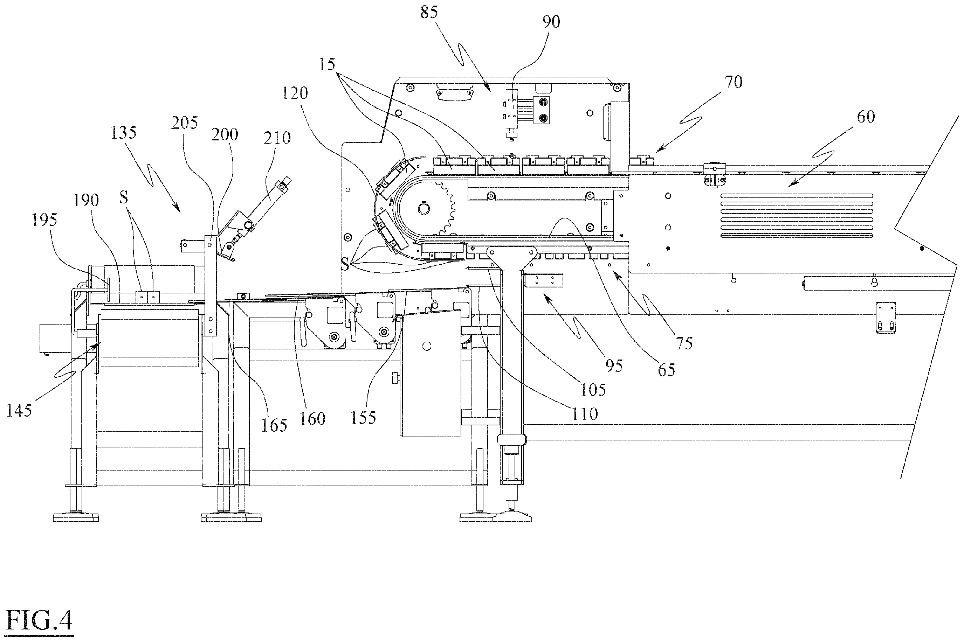

As shown mainly in figures 1 and 4, the skewer machine 10 comprises a conveyor provided with the forming trays 15.

For example, the forming tray conveyor comprises a (horizontal) conveyor belt 60 of the forming trays 15 with which the forming trays 15 are for example, removably associated. The conveyor belt 60 of the forming trays 15 extends longitudinally along a transport direction of the skewers S, for example a substantially horizontal transport direction.

The forming trays 15 are associated with the conveyor belt 60 so that the longitudinal axis of each housing seat 20 is arranged transversely, for example perpendicularly, to the transport direction of the skewers S defined by the conveyor belt 60, i.e. to a longitudinal axis of the conveyor belt 60.

In particular, with reference to figure 4, the conveyor belt 60 of the forming trays 15 is provided with a closed-loop transport belt 65 with which the forming trays 15 are for example, removably associated. It is not excluded in alternative embodiments for the transport belt 65 to be replaced by one or more chains or other equivalent means, as known to a person skilled in the art.

The transport belt 65 comprises a plurality of coupling elements, for example shaped like elongated bars, which make a prismatic connection with a respective complementary groove made in each forming tray 15, on the face of the forming tray itself opposite to the concavity of the housing seat 20.

The forming trays 15 are associated with the transport belt 65 so that the bottom wall 25 of each housing seat 25 substantially is parallel to the transport belt itself.

The transport belt 65 in the embodiment illustrated is supported by two pulleys (or rollers) placed at the longitudinal ends of the transport belt itself, at least one of which is motorized for moving the transport belt 65.

The conveyor belt 60 of the forming trays 15, i.e. the transport belt 65, has a first stretch 70 in which the forming trays are arranged with concavity of the housing seat 20 facing upwards, and a second stretch 75 in which the forming trays 15 are arranged with concavity facing downwards.

In practice, the housing seat 20 is accessible from the top in the first stretch 70 and is accessible from the bottom in second stretch.

Similarly, the extraction groove 50 is accessible from the top in the first stretch 70 and is accessible from the bottom in second stretch.

There is a reversing stretch 80 between the first stretch 70 and the second stretch 75, in which reversing stretch the conveyor belt 60 of the forming trays 15, i.e. the transport belt 65, performs a 180° curve.

In practice, the transport belt 65 is partially wound on one pulley of the pair of pulleys in the reversing stretch.

Moreover, there is a further reversing stretch between the second stretch 75 and the first stretch 70, in which reversing stretch the transport belt is partially wound on the other pulley.

The forming trays 15 in the first stretch 70 are transported by the conveyor belt 60 of the forming trays 15 along the transport direction according to a transport direction A, and the forming trays 15 in the second stretch are transported along the transport direction according to a transport direction B, which is opposite to the transport direction A.

Again with particular reference to figures 1 and 4, the skewer machine 10 comprises an automatic forming station 85 of the skewers S, in which the spits are inserted into the pieces of ingredients in the housing grooves 20.

The forming station 85 acts on the forming trays 15 in the first stretch 70 of the conveyor belt 60 of the forming trays 15, for example one at a time.

As shown in figure 4, the forming station 85 comprises a press 90 which presses on each forming tray 15 from the top down so as to keep the pieces of ingredients in the housing seat while an actuator (not shown) inserts the spits into the pieces of ingredients by pushing said spits into the forming tray 15 through the respective housing channels 45.

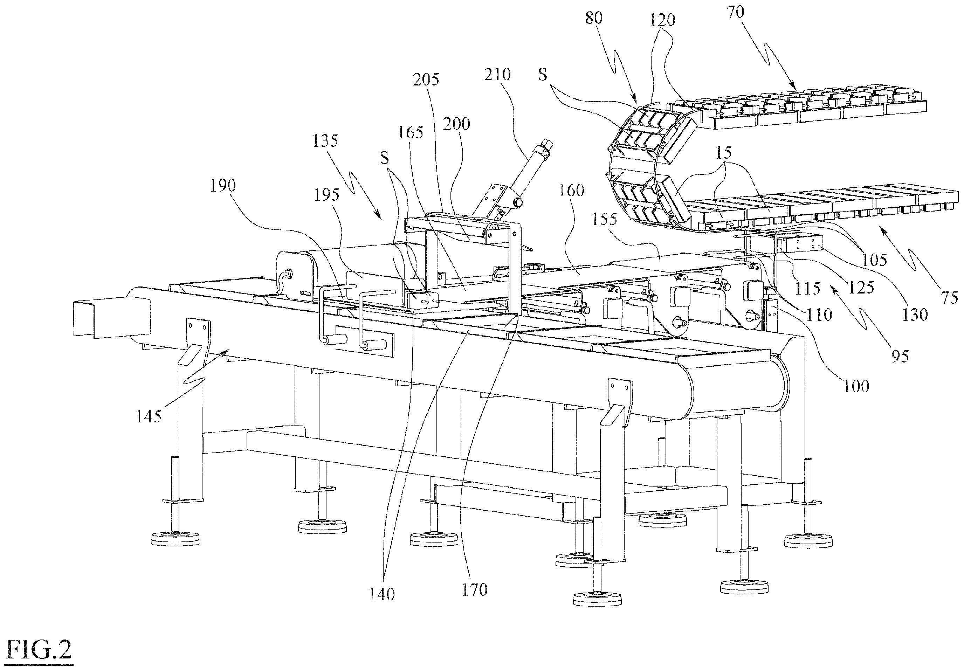

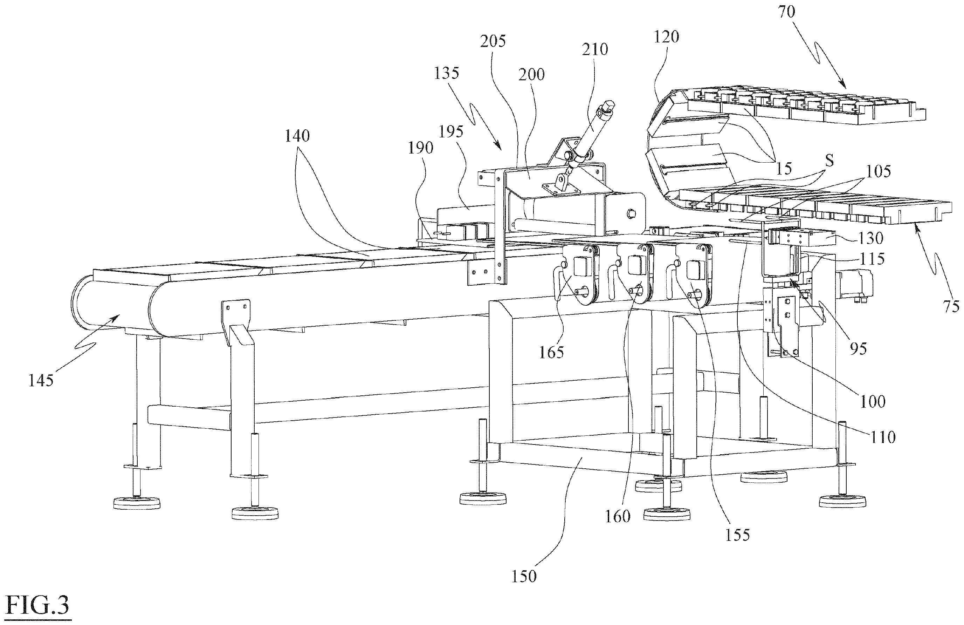

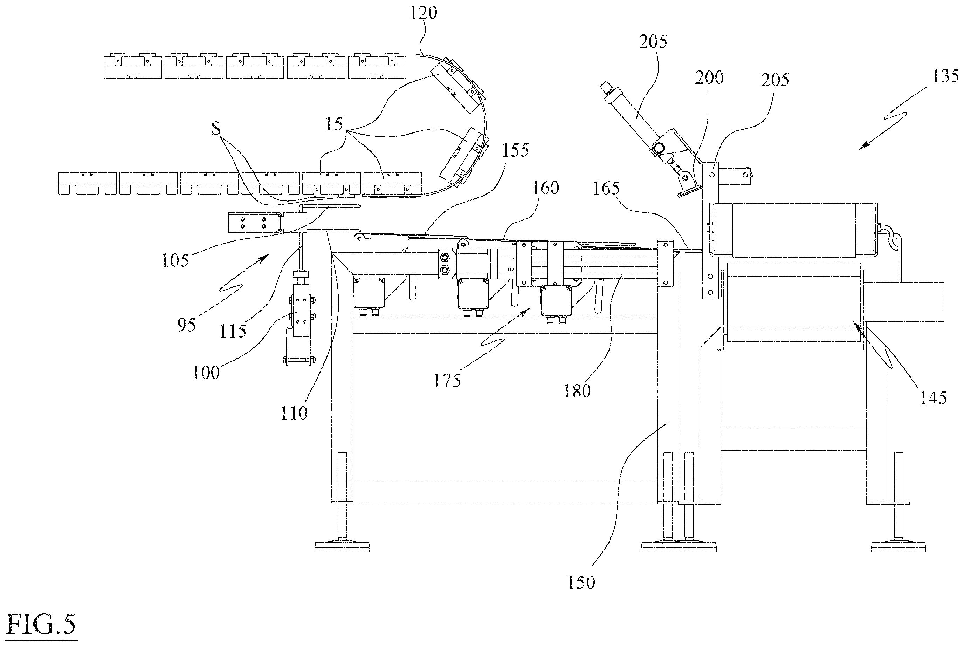

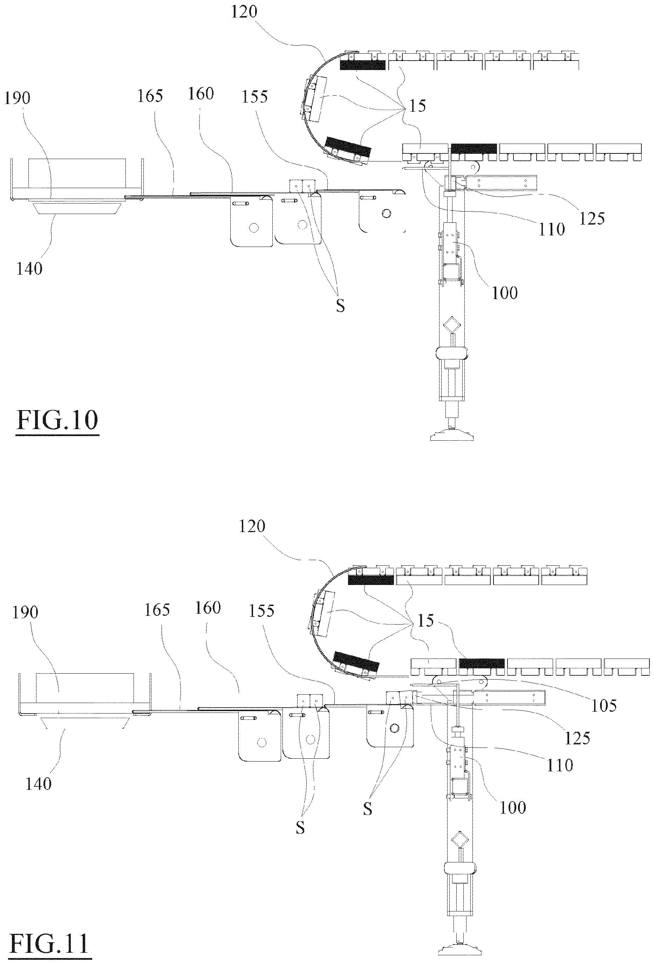

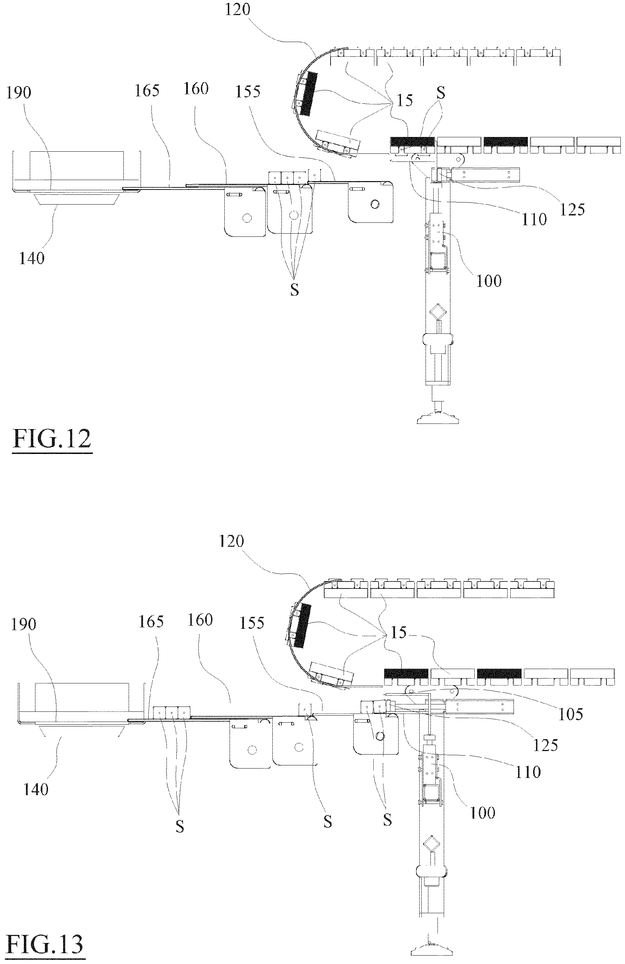

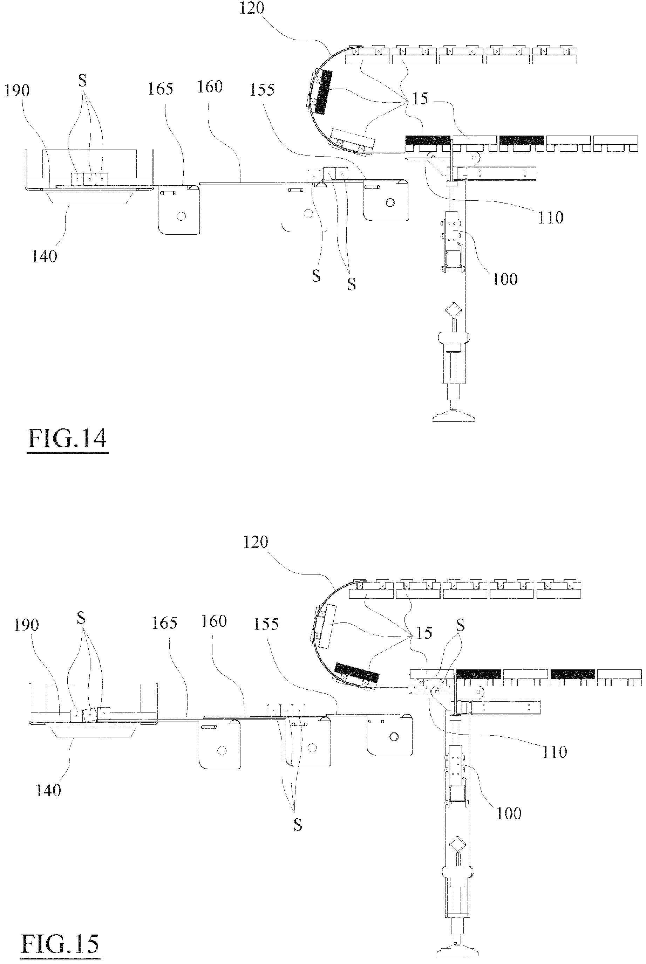

With particular reference to figures 2 to 15, the skewer machine 10 comprises an extraction station 95 of the skewers S, which is configured to automatically extract the skewers (formed in the forming station 85) from the respective housing grooves 20 of the forming trays 15.

Such extraction station 95 is placed immediately downstream of the forming station 85 of the skewers S with respect to the production flow direction of the skewers in the skewer machine 10.

The embodiment of the extraction station shown in the drawings and described here is to be considered common, therefore applicable, to all the embodiments of the skewer machine described below.

The extraction station 95 comprises an abutment element, for example which can be vertically aligned to the housing seat 20, and an operating device of the abutment element configured to move the abutment element, for example along a vertical movement axis, between a first position in which the abutment element does not interfere with the skewer S in the housing seat 20, and a second position in which the abutment element directly comes into contact with said skewer S in such a manner whereby in the passage from the first position to the second position, the abutment element comes into contact with and extracts the skewer S from the housing seat 20.

In the first position, the abutment element is at least partially at a height comprised between the transport belt 65 and the housing seat 20, i.e. between the transport belt 65 and the bottom wall 25 of the housing seat 20.

Preferably, the abutment element is at least partially housed in the extraction groove 50 in the first position, for example in both the extraction grooves 50, i.e. the abutment element is at least partially housed in a volume of the extraction groove 50 in the first position, for example in a volume of each extraction groove 50, comprised between the bottom wall 55 of the extraction groove itself and a lying plane of the bottom wall 25 of the skewer housing seat 20.

With respect to when it is in the first position, in the second position, the abutment element is at a greater distance from the conveyor belt 60 of the forming trays 15, i.e. at a portion of conveyor belt 60 with which the forming tray 15 in the extraction station 95 is associated.

The extraction station 95 is configured to extract the skewers from the forming trays which are in the second stretch 75, i.e. in the stretch in which the housing grooves 20 are oriented with concavity facing downwards.

The abutment element is therefore positioned below the conveyor belt 60 of the forming trays 15 at the second stretch 75.

Moreover, when it is in the first position, the abutment element is at a higher height than when it is in the second position, and it pushes the skewer S in the housing seat 20 downwards in the passage from the first position to the second position, for example the skewers S in the two housing seats of a forming tray 15.

The abutment element could be shaped like a C arranged vertically, i.e. lying on a vertical plane.

The operating device of the abutment element is configured to move the abutment element only along the vertical movement axis.

Such an operating device comprises a linear actuator 100, for example a hydraulic or pneumatic cylinder or again a linear electrical actuator.

In the embodiment illustrated, the abutment element comprises a pair of rods 105, for example rectilinear rods, arranged with longitudinal axes transversal to a longitudinal axis of the skewer S, i.e. to the longitudinal axis of the housing seat 20.

Preferably, the rods 105 of the pair of rods 105 have a length, in the direction of the longitudinal axis thereof, at least such as to simultaneously act on all skewers housed in the respective housing grooves 20 of a same forming tray.

Said rods 105 lie on a substantially horizontal plane and have parallel longitudinal axes, preferably the rods are also spaced apart from each other, along a horizontal direction, by a non-null quantity, for example by a quantity less than the length of the skewer in direction of the longitudinal axis of the skewer itself. The rods preferably are spaced apart from each other in such a manner as to be vertically introduced and extracted into/from the extraction grooves 50 of each forming tray 15.

The rods 105 of the pair of rods 105 have a tapered axial end, for example a conical end. The rods 105 have circular cross-section.

When the abutment element is in the first position, the rods 105 of the pair of rods 105 are entirely placed at a height comprised between the transport belt 65 and the housing seat 20, i.e. between the transport belt 65 and the bottom wall 25 of the housing seat 20. In the embodiment shown in the drawings, when the abutment element is in the first position, the rods 105 are housed in the extraction grooves 50, i.e. in the first position the rods 105 are at least partially each housed in a volume of a respective extraction groove 50 comprised between the bottom wall 55 of the extraction groove itself and a lying plane of the bottom wall 25 of the skewer housing seat 20.

For example, in the second position, the rods 105 are in the respective extraction grooves at a height which is at least equal to the height of the walls of the housing seat 20. Preferably, in the second position, the rods 105 are outside the housing grooves 20, for example they are external to the forming tray 15.

In the passage from the first position to the second position, the rods 105 vertically translate along the extraction grooves 50, thus directly pushing on the pieces of ingredients forming the skewer.

In an alternative embodiment of the abutment element (not shown), the distance between the rods 105 along the horizontal direction is less than the total length of a skewer S, i.e. of the spit of the skewer S, and at the housing seat 20, is greater than the width of the forming tray, in the direction of the longitudinal axis of the housing seat 20. I.e. the distance between the rods 105 along the horizontal direction is less than the total length of a skewer and greater than the distance between a pair of faces of the second walls of each housing seat 20 facing in opposite direction with respect to the inside of the housing seat 20.

In this alternative embodiment (not shown), the rods 105, in the passage from the first position to the second position, vertically translate at the sides of the forming trays, for example externally with respect to the second walls of the housing grooves 20, thus pushing into contact on end portions of the spit of the skewer S.

Again in this alternative embodiment (not shown), none of the forming trays 15 comprises the extraction grooves.

Returning to the embodiment shown of the abutment element, the abutment element comprises a further pair of rods 110, which are placed at a lower height than the rods 105 of the pair of rods 105 and are configured to support the skewer at the bottom during and after the extraction from the housing seat 20.

The vertical distance between the pair of rods 105 and the further pair of rods 110 therefore is greater than the thickness, in the same direction, of a skewer S housed in the housing seat 20.

The rods 110 of the further pair of rods 110 substantially are parallel and coplanar to one another and with respect thereto, for example each one of them is rectilinear.

The rods 110 of the further pair of rods 110 have a length, in the direction of the longitudinal axis thereof, at least such as to simultaneously act on the skewers housed in respective housing grooves 20 of a same forming tray 15.

Each rod of the pair of rods 105 preferably is superimposed in plan to a respective rod of the further pair of rods 110.

The rods 110 of the further pair of rods 110 have a tapered axial end, for example a conical end. The rods 110 of the further pair of rods 110 have circular cross-section. The further pair of rods 110 is rigidly connected by the pair of rods 105 and is moved together therewith between the first position and the second position by the operating device of the abutment element.

For example, the extraction station 95 comprises a support frame to which the pair of rods 105 and the further pair of rods 110 are rigidly fastened, preferably cantilevered fastened and on a same side, which support frame is moved by the operating device.

The support frame is placed below the conveyor belt 60 of the forming trays 15 and the rods 105, 110 protrude therefrom in an opposite direction with respect to the transport direction B.

The support frame is shaped like a frame 115, for example U-shaped lying on a vertical plane, to which the pair of rods 105 and the further pair of rods 110 are rigidly fastened in a cantilevered manner on a same side.

For example, said frame comprises a horizontal bar to which are fastened the rods 105 of the pair of rods 105 and a pair of vertical bars fastened at the axial ends of the horizontal bar and at each of which a respective rod 110 of the further pair of rods 110 is fastened.

The extraction station 95 comprises a guide placed at the reversing stretch of the conveyor belt 60, i.e. which extends at least from one end to the other of the reversing stretch of the conveyor belt 60, and is configured to prevent the skewer from completely coming out of the housing seat 20, for example when the concavity of the housing seat is not facing upwards.

Such guide comprises a curvilinear body 120, preferably two curvilinear bodies 120, each of which replicates the trajectory travelled by the skewers S housed in the housing grooves 20, while they travel the reversing stretch, at such a distance from the transport belt as to prevent the skewers S from completely coming out of the respective housing grooves. I.e. each curvilinear body 120 is placed at a greater distance from the transport belt 65 with respect to the walls of the housing seat 20.

The curvilinear bodies 120 are for example, placed at the sides of the second walls 30 of the housing seat 20, in external position with respect to the inside of the housing seat 20, so as to possibly act on the spits of the skewers S.

Moreover, the curvilinear bodies 120 extend from the reversing stretch 80 to the second stretch 75 up to reaching a vertical interface plane, which plane touches the ends of the rods 110 of the pair of further rods 110 facing an opposite direction with respect to the transport direction B.

An alternative embodiment does not exclude the curvilinear elements from partially overlapping the rods 110 of the further pair of rods 110.

The extraction station 95 also comprises a conveyor configured to remove the skewer(s) S resting on the abutment element, for example resting on the rods 110 of the further pair of rods 110, when the abutment element is in the second position.

The extraction station conveyor is configured to move the skewers in an opposite direction with respect to the transport direction B. The conveyor is placed below the conveyor belt 60 of the forming trays 15.

For example, the conveyor comprises a pusher device which in the passage between a retracted position and an extended position, directly pushes on the skewers.

The pusher device preferably comprises a buffer 125 operated by a linear actuator 130, for example a hydraulic or pneumatic cylinder or motorised axle.

Moreover, in the passage from one position to the other, the buffer crosses the opening defined by the frame 115 of the support frame of the rods 105, 110 when the abutment element is in the second position.

In an alternative embodiment (not shown), the conveyor comprises a conveyor belt which defines a transport direction defining a transport surface of the skewers which lies on a plane placed at a height which at least equal to or higher than the height of the rods 110 of the further pair of rods 110 when the abutment element is in the second position.

It is worth noting that transport surface in this disclosure means a real or imaginary surface on which the skewers at least partly rest and are moved.

For example, the transport surface of such conveyor belt of the extraction station is formed by an upper portion of a transport belt of such conveyor belt comprised between a pair of portions of said transport belt itself partially wound on a pair of end pulleys. Such conveyor belt has such a width to be introduced between the rods 110 of the further pair of rods 110.

The skewer machine 10 comprises an automated skewer sorting station 135 which is placed, for example immediately, downstream of the skewer extraction station 95 with respect to the flow of the skewers in the skewer machine 10.

In the drawings illustrated, the sorting station is shown in the presence of the above-described forming station and the extraction station, however it may be combined with stations having different features, for example it could be placed downstream of a tank or a hopper or a conveyor belt, on which there is a plurality of already formed skewers. Therefore, the present sorting station can be protected independently of the rest of the skewer machine.

The sorting station 135 is adapted to sort the skewers, for example to group the skewers S into groups of sorted skewers formed by a predetermined number of skewers S, and to position such groups of sorted skewers directly in a plurality of respective containers 140. Each container 140 is shaped in such a manner as to house only the predetermined number of skewers of the group of skewers S.

Preferably, each container 140 is at least part of a package with which the skewers are sold.

Group of sorted skewers means a plurality of skewers formed by a predetermined number of skewers, all arranged with parallel and aligned longitudinal axes, for example in contact, along a direction perpendicular to the longitudinal axes of the skewers themselves. The sorting station 135 may be interposed between the extraction station 95 and a conveyor 145 adapted to move the containers 140, for example said conveyor belonging to an automated supply station of the containers 140 of the skewer machine 10.

The sorting station 135 comprises a plurality of conveyors, placed in series, which move the skewers S coming from the extraction station 95 along a transverse transport direction, for example perpendicular to the longitudinal axis of each skewer.

The plurality of conveyors comprises a first conveyor, a second conveyor and a third conveyor, placed in series with one another and directly connected to each other, i.e. without the interposition of further transport means.

The first conveyor, the second conveyor and the third conveyor define parallel transport directions of the skewers S, for example aligned with one another and transverse, for example perpendicular, to the longitudinal axes of the skewers.

Moreover, the transport direction of the skewers S is the same for all such conveyors. The first conveyor is placed immediately downstream of the extraction station with respect to the flow of the skewers S in the skewer machine 10, for example it is directly interposed between the extraction station and the second conveyor.

The second conveyor is placed immediately downstream of the first conveyor with respect to the flow of the skewers S in the skewer machine 10, for example it is directly interposed between the first conveyor and the third conveyor.

The third conveyor is placed immediately downstream of the second conveyor with respect to the flow of the skewers in the skewer machine, for example it is directly interposed between the second conveyor and the container conveyor.

Such conveyors each have respective independent mechanically-operated systems. The operating systems of the first conveyor and of the second conveyor are controlled in conjunction with each other to sort the skewers coming from the extraction station into groups of sorted skewers.

In particular, the second conveyor brings the groups of already sorted skewers to the third conveyor belt.

The operating system of the third conveyor is controlled in conjunction with the operating systems of the first conveyor and of the second conveyor to arrange the groups of sorted skewers in the respective containers 140.

In particular, the second conveyor brings the groups of already sorted skewers to the third conveyor.

The sorting station 135 comprises a support frame 150 with which said conveyors are associated.

The first conveyor and the second conveyor are rigidly fastened to said support frame 150 without residual levels of freedom.

The third conveyor is slidingly associated with the support frame 150 with respect to a sliding axis which is parallel, for example, also horizontal, to the transport direction of the skewers S on the third conveyor.

The sorting station comprises a movement system configured to put the third conveyor into translation along said sliding axis.

The third conveyor partly overlaps a container 140 in which to position the groups of sorted skewers, i.e. it partially overlaps the conveyor adapted to move said containers and for example, may be horizontally translated so as to vary the degree of overlapping with said container 140.

This solution also allows adapting the sorting station to containers having different sizes. The third conveyor is horizontally movable, for example along the direction parallel to the transport direction of the skewers S on the third conveyor itself, between a first position, in which the distance of the third conveyor from the second conveyor is maximum and the third conveyor partially overlaps the container 140 in which to introduce the groups of sorted skewers, and a second position, in which the distance from the second conveyor is minimum.

Furthermore, the distance between an end of the third conveyor distal from the second conveyor and an end of the container 140 distal from the second conveyor is minimum in the first position, and such distance is maximum in the second position.

The transport direction of the groups of sorted skewers, which is defined by the third conveyor, is transverse, for example orthogonal, to a transport direction of the containers 140 defined by the container conveyor itself.

The second conveyor is fixed and is shaped so as to always partially overlap the third conveyor independently of the position of third conveyor.

In all the embodiments shown of the sorting station 135, the three conveyors of the sorting station 135 comprise a first conveyor belt 155, a second conveyor belt 160 and a third conveyor belt 165, respectively, which are placed in series with one another and are directly connected to one another, i.e. without the interposition of further transport means. Alternative embodiments do not exclude such conveyor belts from being wholly or partly equivalently replaced by motorized roller conveyors or other means known to a person skilled in the art, or again from each having a support frame thereof.

The transport direction defined by the first conveyor belt 155, by the second conveyor belt 160 and by the third conveyor belt 165, is transverse, for example perpendicular, to the longitudinal axes of the skewers.

In particular, the transport direction defined by said belts is parallel to the transport direction of the conveyor belt 60 of the forming trays 15.

For example, said conveyor belts define a skewer transport direction which is opposite to the transport direction B.

The first conveyor belt 155, the second conveyor belt 160 and the third conveyor belt 165 comprise a mechanically-independent first transport belt, second transport belt and third transport belt, respectively.

Moreover, the first conveyor belt 155, the second conveyor belt 160 and the third conveyor belt 165 comprise a mechanically-independent first operating system, second operating system and third operating system, respectively.

Each operating system comprises a motor, for example an electric motor, and at least one driving pulley (or driving roller) coupled to the respective transport belt to move it. Each operating system operates the respective conveyor belt so as to independently move (i.e. at different times and/or speeds) the skewers.

The first conveyor belt 155, i.e. the first transport belt, is shaped so as to define a transport surface of the skewers, for example a flat surface, which lies on a plane placed at a lower, or at most equal, height than/as the abutment element, for example of the rods 110 of the further pair of rods 110, when the abutment element is in the second position.

For example, the transport surface of the first conveyor belt 155 is formed by an upper portion of the first transport belt comprised between a pair of portions of said first transport belt itself partially wound on a pair of end pulleys.

Optionally, the transport surface of the first conveyor belt 155 lies on an inclined plane with respect to a horizontal plane, i.e. a portion of first conveyor belt 155, i.e. a first transport belt, close to the extraction station 95 is placed at a higher height than a portion close to the second conveyor belt 160.

The first conveyor belt 155, i.e. the transport surface defined thereby, has a length in the transport direction T which is at least equal to the volume in the same direction of a forming tray 15 associated with the conveyor belt 60.

The second conveyor belt 160 may be positioned at a height which is equal to or less than the first conveyor belt 155, for example the first conveyor belt 155 is partially superimposed in plan to the second conveyor belt 160.

In practice, the second conveyor belt 160, i.e. the second transport belt, is shaped so as to define a transport surface of the skewers, for example a flat surface, which lies on a plane placed at a lower, or at most equal, height than/as the transport surface of the first conveyor belt 155.

The transport surface of the second conveyor belt 160 is formed by an upper portion of the second transport belt comprised between a pair of portions of said second transport belt itself partially wound on a pair of end pulleys.

The second conveyor belt 160, i.e. the transport surface defined thereby, has length in the transport direction T such whereby it always partially overlaps the transport surface of the third conveyor belt 165.

Preferably, the third conveyor belt 165 defines a transport direction of the (sorted) skewers which is transverse, for example orthogonal, to a transport direction of the containers on the provided conveyor.

The third conveyor belt 165, i.e. the third transport belt, is shaped so as to define a transport surface of the skewers, for example a flat surface, which lies on a plane placed at a lower, or at most equal, height than/as the transport surface of the second conveyor belt 160.

Moreover, such transport surface of the third conveyor belt 165 is at a higher height than the containers 140, for example the transport surface of the third conveyor belt 165 always partially overlaps the container 140 in which to position the sorted skewers, i.e. the transport surface of the third conveyor belt 165 always partially overlaps the conveyor belt 145 which moves the containers 140.

The transport surface of the third conveyor belt 165 is formed by an upper portion of the third transport belt comprised between a pair of portions of said third transport belt itself partially wound on a pair of end pulleys.

The third conveyor belt 165 is slidingly associated with respect to a sliding axis parallel to the transport direction of the skewers S on the third conveyor, for example also horizontal, to the support frame 150 of the sorting station, so as to translate above the container in which to introduce a group of skewers, i.e. in such a manner as to translate above the conveyor 145 of the containers 140.

The third conveyor belt is movable along such sliding axis so as to vary the degree of vertical overlapping with said container 140, i.e. so as to vary the degree of vertical overlapping with the conveyor 145.

In particular, the third conveyor belt 165 is movable along such a sliding axis at least between a first position, in which the distance of the third conveyor belt 165 from the second conveyor belt 160 and the third conveyor belt is maximum, i.e. the transport surface of the third conveyor belt partially overlaps the container 140 in which to introduce the group of sorted skewers, i.e. it partially overlaps the conveyor belt which moves the containers, and a second position, in which the distance from the second conveyor belt is minimum.

In particular, the third conveyor belt 165 for example, only partially overlaps a bottom wall 170 of the container 140 at least in the first position.

For example, the distance between an end of the third conveyor belt 165 distal from the second conveyor belt 160 and an end of the container 140 distal from the second conveyor belt is minimum in the first position, and such distance is maximum in the second position.

In the second position, the third conveyor belt 165 is vertically misaligned with respect to the bottom wall 170 of the container 140.

Specifically, in the second position, the edge of the third conveyor belt 165 distal from the second conveyor belt 160 is at a greater distance from the second conveyor belt 160 with respect to the distance, from the second conveyor belt 160, of an end of the bottom wall 170 of the container 140 close to the second conveyor belt 160.

Furthermore, the third conveyor belt 165 may pivot at the end thereof close to the second conveyor belt 160 with respect to a horizontal pivot axis, such whereby by rotating the third conveyor belt with respect to said pivot axis, it is possible to vary the height of the end of the third conveyor belt 165 distal from the second conveyor belt 160 with respect to the height of the end of the third conveyor belt 165 close to the second conveyor belt. The sorting station 135 comprises a movement system 175 of the third conveyor belt 165 adapted to move it along the sliding axis, for example between the first position and the second position.

Such movement system 175 comprises a guide 180, which is fastened to the support frame 150, to which the whole third conveyor belt 165 is slidingly fastened.

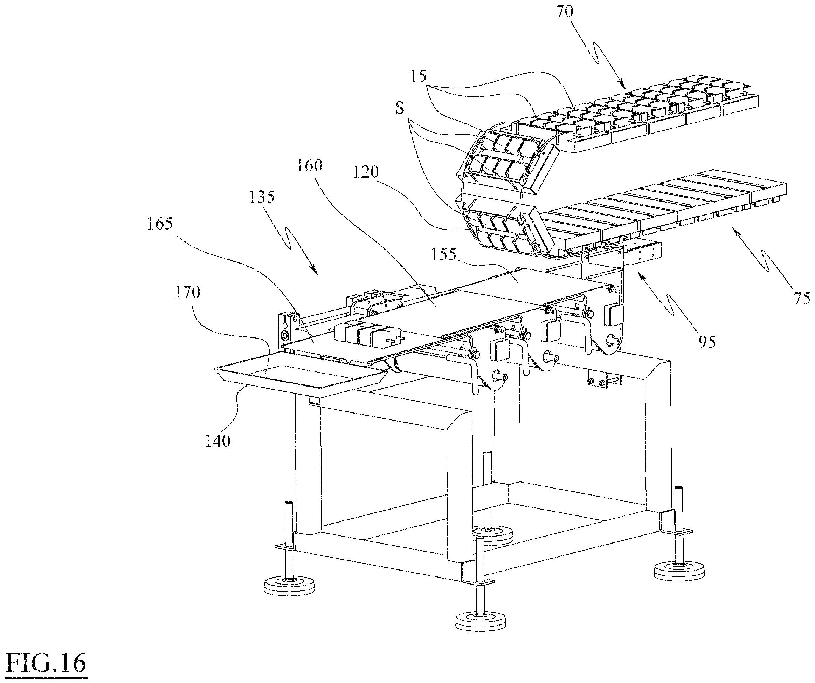

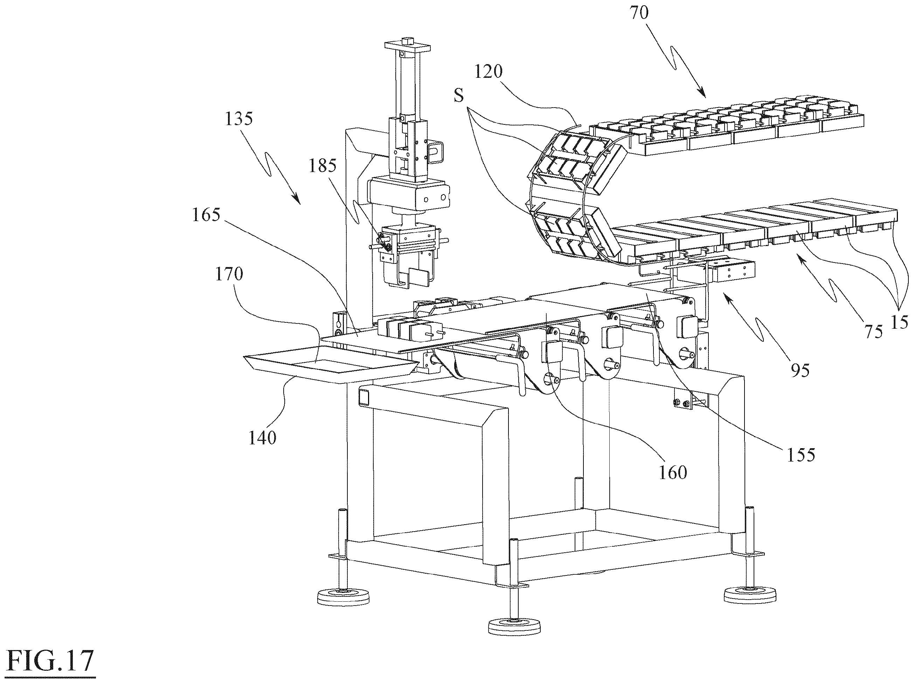

In the embodiments of the sorting station shown in figures 16 and 17, the plurality of conveyors of the sorting station 135 comprises only the first conveyor belt 155, the second conveyor belt 160 and the third conveyor belt 165, directly interposed between the extraction station 95 and the containers 140, i.e. directly interposed between the extraction station 95 and the container conveyor.

In the particular embodiment in figure 17, the sorting station 135 also comprises an automated gripper 185 configured to rotate the group of sorted skewers on the third conveyor, i.e. on the third conveyor belt 165.

In particular, such gripper 185 is configured to rotate the skewers by 90° with respect to a vertical axis.

In practice, such gripper 185 varies the orientation of the skewers, i.e. the longitudinal axes of the skewers.

Such gripper 185 may for example, be moved vertically between a resting position, in which it does not interfere with the products on the second conveyor belt 160, and an active position, in which it is brought to such a height as to grip and successively rotate the skewers.

In another embodiment again of the sorting station shown in figures 1 to 5 and 18, the extraction station comprises a fourth conveyor, interposed between the third conveyor, i.e. the third conveyor belt 165, and the container in which to place the group of skewers, i.e. the conveyor belt 145 of the containers 140.

In particular, the fourth conveyor is for example, completely, superimposed in plan to a section of the conveyor belt 145 which is close to the third conveyor.

Preferably, the fourth conveyor has a width which is equal, in direction transverse to its transport direction of the groups of skewers, to the width in the same direction of the conveyor 145.

Therefore, the third conveyor may be partially superimposed in plan to the fourth conveyor.

The fourth conveyor defines a transport direction of the groups of skewers which is transverse, for example perpendicular, to the transport direction of the third conveyor and parallel to the longitudinal axes of the skewers themselves.

For example, the transport direction of the group of skewers defined by the fourth conveyor is parallel to the transport direction of the containers in the conveyor 145. Preferably, the fourth conveyor defines a transport direction of the group of skewers which is concordant with the transport direction of the containers 140 defined by the conveyor 145.

The fourth conveyor is fixed with respect to the containers, i.e. with respect to the conveyor belt 145.

For example, the fourth conveyor is fixed also with respect to the third conveyor.

The fourth conveyor comprises a fourth conveyor belt 190, for example provided with a fourth transport belt and a fourth operating system which is mechanically independent of the operating systems of the other conveyors.

The fourth conveyor belt 190, i.e. the fourth transport belt, defines a transport surface which is at a lower height than the transport surface of the third conveyor belt.

In the embodiment shown in figures 1 to 5, the sorting station 135 may also comprise a compaction unit configured to compact the group of skewers released by the third conveyor, i.e. by the third conveyor belt, onto the fourth conveyor, i.e. onto the fourth conveyor belt 190.

In practice, such compaction unit is configured to push the outer skewers S of each group of skewers towards the centre of the group of skewers.

Such compaction unit comprises two walls 195, 200, lying on vertical plane and parallel to the transport direction defined by the fourth conveyor, at least one of which is movable in direction towards and away from a vertical centreline plane of the fourth conveyor parallel to the transport direction defined by the fourth conveyor itself.

In the example shown, the compaction unit comprises a first wall 195 rigidly connected to the fourth conveyor or to the conveyor 145 of the containers 140 by means of a device for adjusting the distance of the wall itself with respect to the vertical centreline plane of the fourth conveyor parallel to the transport direction defined by the fourth conveyor itself. Moreover, the compaction unit comprises a second wall 200 connected, for example rotatably connected, to the fourth conveyor or to the conveyor 145 of the containers 140.

In the embodiment of the compaction unit shown, the compaction unit comprises a bridge structure 205 rigidly connected to the fourth conveyor or to the conveyor 145, which defines an opening at least crossed by the third conveyor and to which the second wall 200 is rotatably associated.

The compaction unit comprises an actuator 210 configured to operate said second wall between a first position, in which the distance of the second wall from the centreline plane of the fourth conveyor is maximum, and a second position in which such distance is minimum.

In particular, in the first position, the second wall 200 is at a higher height than the third conveyor, such as not to interfere with the transfer of the skewers S.

The actuator 210 is connected to said bridge structure to move the second wall 210.

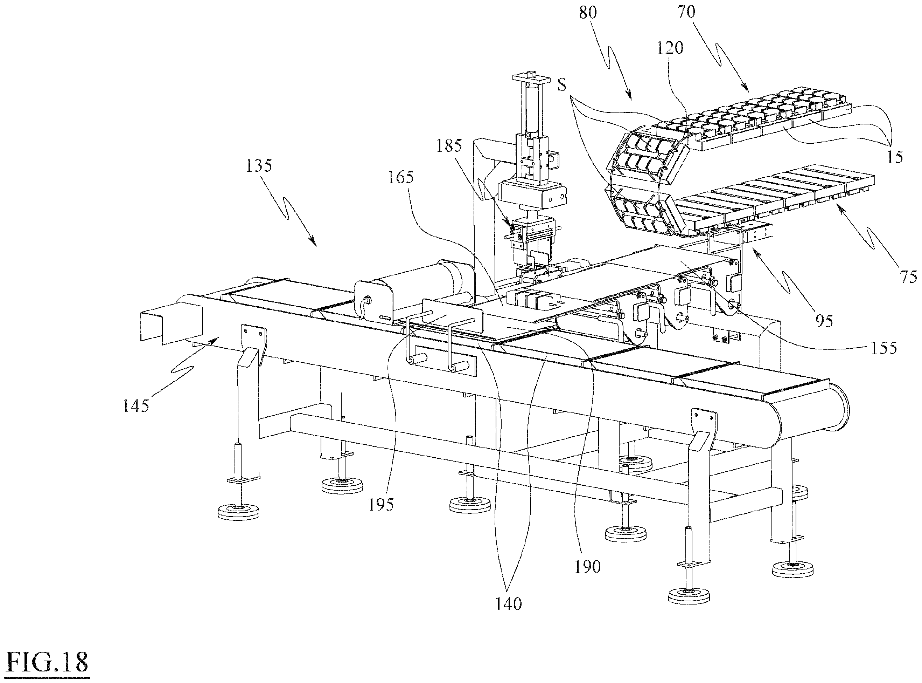

In the embodiment shown in figure 18, the compaction unit only comprises the first wall 195 and the device for adjusting the distance of the first wall itself with respect to the centreline plane of the fourth conveyor.

The gripper 185 may also be comprised in such an embodiment.

In all the embodiments shown, the extraction station 95 and the sorting station 135 are connected by means of the conveyor configured to remove the skewer(s) S resting on the abutment element, for example resting on the rods 110 of the further pair of rods 110, when the abutment element is in the second position.

Such conveyor in particular moves the skewer(s) S resting on the abutment element, for example resting on the rods 110 of the further pair of rods 110, when the abutment element is in the second position, from the abutment element to the first conveyor, i.e. to the first conveyor belt 155.

The movement machine 10 also comprises an electronic control unit, for example operatively connected to the conveyor belt 60 of the forming trays 15, to the extraction station and to the sorting station, for example which is configured to perform all or parts of a method disclosed below.

The invention also makes available a production method of skewers by means of the skewer machine 10. For example, such method comprises the step of inserting a spit into the pieces of ingredients in a housing seat of each forming tray in the forming station.

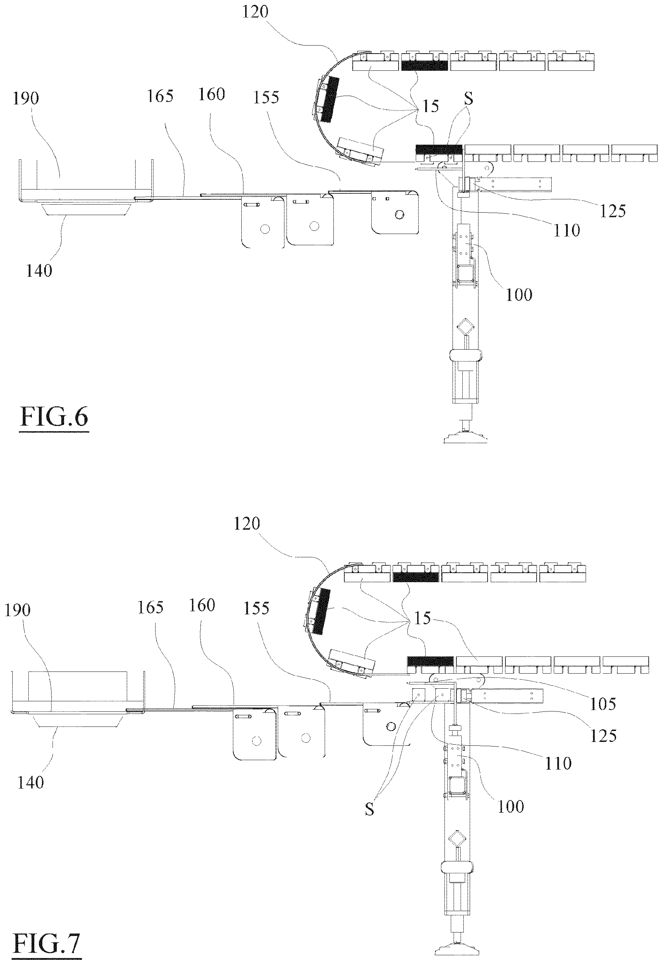

In all the embodiments of the skewer machine 10 shown and described, the production method of skewers S comprises a step of extracting the skewers S from the forming trays 15 by means of the extraction station described above. Such method is diagrammatically shown in figures 6 to 9.

The extraction step comprises the following sub-steps: advancing the conveyor belt 60 of the forming trays 15 so the forming trays advance by one step, keeping the conveyor belt 60 stationary in the position reached for a predetermined time interval, and cyclically repeating the steps of advancing the conveyor belt and keeping it stationary in the position reached.

The time interval in which the conveyor 60 is kept stationary may for example be predetermined, i.e. it may be for example, a predetermined time interval saved in the electronic control unit.

Alternatively, the time interval in which the conveyor 60 is kept stationary may be calculated by the electronic control unit by means of sensors, for example optical or mechanical sensors, configured to determine the position of the forming trays 15 on the conveyor belt 60.

The step substantially is equal to the width of a single forming tray 15, in the transport direction of the forming trays 15 on the conveyor belt 60.

The extraction step of the skewers S also comprises a sub-step of keeping the abutment element in the first position during the advancement step of the conveyor belt 60 and a sub-step of successively moving the abutment element from the first position to the second position and then from the second position to the first position during the step in which the conveyor belt 60 is kept stationary.

Preferably, after the abutment element is brought to the second position, the extraction step comprises a sub-step of keeping the abutment element in the second position for a predetermined time interval, for example contained within the time interval in which the conveyor belt 60 is kept stationary.

Successively to the extraction step, the production method of the skewers S comprises a step of transferring the skewers S from the extraction station 95 to the sorting station 135, which comprises a sub-step of operating the conveyor configured to move the skewers S from the abutment element when the abutment element is in the second position, for example at the end of positioning the skewers on the first conveyor of the sorting station 135.

In particular, such step comprises a sub-step of operating the pusher device 125, 130 to push the skewers on the abutment element onto the first conveyor during the time interval in which the abutment element remains in the second position.

The invention also makes available a method for positioning skewers S in containers 140 by means of the skewer machine 10, i.e. by means of the sorting station 135.

It is apparent that the present method of positioning skewers S in containers 140 can be protected independently of the production method of the skewers.

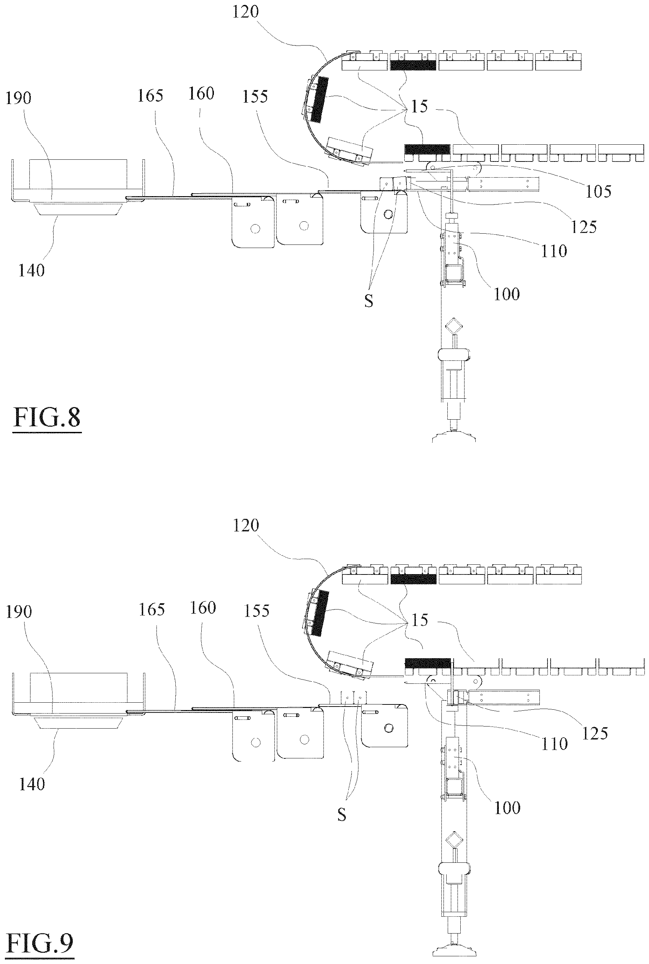

Such method comprises a step of grouping the skewers into groups formed by a predetermined number of skewers. Such method is diagrammatically shown in figures 9 to 15. When the number of skewers of the group of skewers to be positioned in the containers 140 is greater than the number of skewers in a forming tray 15, the step of grouping the skewers S comprises a sub-step of operating the first conveyor to move the skewers S to the second conveyor and bring the skewer(s) S onto the first conveyor at an edge of the first conveyor adjacent to the second conveyor. The step of grouping the skewers S successively comprises a sub-step of operating the first conveyor and the second conveyor in the same transport direction, at the same speed and for a time interval sufficient to place, on the second conveyor, the skewers S which were previously positioned at the edge of the first conveyor adjacent to the second conveyor, in position immediately adjacent to the edge of the first conveyor close to the second conveyor.

It is worth noting that edges of conveyors mean edges of the conveyors which are transverse with respect to the transport directions defined by the conveyors themselves. I.e., it means the edges of the transport surfaces of the conveyor belt of the respective conveyors, which are transverse to the transport directions defined by the conveyor belts themselves.

The time interval in which the first conveyor and the second conveyor are operated in the same transport direction and at the same speed may for example be predetermined, i.e. it may be for example, a predetermined time interval saved in the electronic control unit. Alternatively, such time interval may be calculated by the electronic control unit by means of sensors, for example optical or mechanical sensors, configured to determine the position of the skewers on the first conveyor and on the second conveyor.

So long as the number of skewers on the second conveyor is less than the predetermined number of skewers S of the group of skewers, the step of grouping the skewers S provides cyclically repeating the following sub-steps:
- keeping the second conveyor belt stationary and operating the first conveyor to move the skewers (extracted at a successive extraction step with respect to the ones on the second conveyor) to the second conveyor, and bringing the skewer(s) S on the first conveyor at an edge of the first conveyor adjacent to the second conveyor, and then
- operating the first conveyor and the second conveyor in the same transport direction, at the same speed and for a time interval sufficient to place, on the second conveyor, the skewers which were previously positioned at the edge of the first conveyor adjacent to the second conveyor, in position immediately adjacent to the edge of the first conveyor close to the second conveyor.

When the number of skewers S on the second conveyor is equal to the predetermined number of skewers of the group of skewers, the step of grouping the skewers comprises a sub-step of operating the second conveyor and the third conveyor to bring the group of skewers S to the third conveyor. In this step of operating the second conveyor and the third conveyor to bring the group of skewers to the third conveyor, such conveyors are operated for a time interval in the same transport direction and at the same speed in order to transfer the group of skewers in a sorted manner.

Following the step of grouping the skewers, the method of positioning skewers in containers 140 comprises a step of placing the group of skewers S in a predetermined container 140.

The placement step of the group of skewers comprises a sub-step of operating the third conveyor to bring the group of skewers at an edge of the third conveyor distal from the second conveyor and then a sub-step of translating the third conveyor above the predetermined container in which to place the group of skewers and simultaneously operating the third conveyor to move the group of skewers in a transport direction towards the predetermined container, for example at the same speed as the translation of the third conveyor.

In particular, placement step of the group of skewers comprises a sub-step of operating the movement system of the third conveyor to bring the third conveyor in the first position and then operate the operating system of the third conveyor to bring the group of skewers at the edge of the third conveyor distal from the second conveyor, i.e. the edge of the third conveyor partially overlapping the container 140 in which to place the group of skewers.

The placement step of the group of skewers then comprises a sub-step of operating the third conveyor, i.e. the movement system of the third conveyor, to translate above the container, and operating the third conveyor, i.e. the operating system of the third conveyor, to advance the skewers of the group of skewers in a transport direction facing towards the container, substantially at the same speed as the translating movement of the third conveyor itself.

For example, the placement step of the group of skewers comprises a sub-step of operating the movement system of the third conveyor to bring it from the first position to the second position while simultaneously operating the operating system of the third conveyor so as to advance the skewers of the group of skewers on the third conveyor in a transport direction facing towards the container, in which the movement of the skewers on the third conveyor substantially occurs at the same speed as the movement of the third conveyor itself from the first position to the second position and for a predetermined time interval.

In the embodiment shown in figures 1 to 5 and 18, the method of positioning skewers in containers comprises a step of moving the containers 140, which comprises a sub-step of operating the conveyor 145 of the containers 140 to keep in position, simultaneously to the placement step of the group of skewers, one container of the containers brought at the third conveyor, for a time interval necessary for the introduction of the skewers. Such time interval is for example, at least equal and simultaneous to the time interval of the placement step of the group of skewers.

In the embodiments in which there is the fourth conveyor, the placement step the group of skewers comprises a sub-step of keeping the fourth conveyor stationary during the step of operating the movement system of the third conveyor to bring it from the first position to the second position, and also comprises a sub-step of operating the fourth conveyor and the conveyor of the containers in the same transport direction, for example for a time interval, so as to cause the group of skewers to fall directly into the container translating below the fourth conveyor dragged by the container conveyor.

In the embodiment shown in figures 17 and 18 in which there is the gripper 185, the grouping step of the spits comprises a step of orienting the skewers S.

The orienting step of the skewers S comprises a sub-step of operating the third conveyor up to bringing the group of skewers S on the third conveyor itself below the gripper 185, a sub-step of successively keeping stationary the third conveyor, and a sub-step of then operating the gripper 185 so it descends vertically onto the group of skewers, rotates the whole group of skewers, for example by an angle substantially of 90°, and then ascends again.

In the embodiment shown in figures 1 to 5, the placement step of the group of skewers comprises a sub-step of compacting the group of skewers.

The sub-step of compacting the group of skewers in turn comprises a sub-step of operating the compaction unit after the third conveyor has positioned the group of skewers on the fourth conveyor and only successively to operating the fourth conveyor and the conveyor 140 of the containers 145 in the same transport direction so as to cause the group of skewers to fall directly into the container 140 translating below the fourth conveyor dragged by the container conveyor.

The invention thus conceived is susceptible to several modifications and variations, all falling within the scope of the inventive concept.

Moreover, all the details can be replaced by other technically equivalent elements. Practically, any materials and also any contingent shapes and sizes may be used, depending on the needs, without departing from the scope of protection of the following claims.

## Claims

1. Skewer machine (10) for the production of skewers (S), comprising:
- a plurality of forming trays (15) of the skewers (S) each provided with a housing seat (20) of a skewer (S),
- an extraction station (95) of the skewers (S) adapted to extract the skewers (S) from the respective housing grooves (20) of the forming trays (15) and comprising:
∘ an abutment element (105, 110), and
∘ an operating device (100) of the abutment element (105, 110) configured to vertically move the abutment element between a first position in which it does not interfere with the skewer (S) in the housing seat (20), and a second position in which it directly comes into contact with said skewer (S) in such a manner whereby in the passage from the first position to the second position, the abutment element (105, 110) comes into contact with and extracts the skewer (S) from the housing seat (20).

2. Skewer machine (10) according to claim 1, wherein in the second position, the abutment element (105, 110) supports the extracted skewer (S) at the bottom.

3. Skewer machine (10) according to claim 1, wherein the abutment element comprises a pair of rods (105) arranged with longitudinal axes transversal to a longitudinal axis of the housing seat (20).

4. Skewer machine (10) according to claim 3, wherein each forming tray (15) of the skewers (S) comprises a pair of extraction grooves (50) which cross the housing seat (20) along a direction which is transverse to the longitudinal axis of the housing seat (20) and wherein there are at least partially positioned the rods (105) of the pair of rods (105) when the abutment element is in the first position.

5. Skewer machine (10) according to claim 1, comprising a conveyor (60) of the forming trays (15), which comprises a stretch (75) in which the forming trays (15) are caused to advance while keeping them with the housing seat (20) of the skewer (S) with concavity facing downwards, and wherein the extraction station (95) is configured to remove the skewers (S) from the forming trays (15) in said stretch (75).

6. Skewer machine (10) according to claims 3 and 5, wherein the abutment element comprises a further pair of rods (110) arranged with longitudinal axes transversal to the longitudinal axis of the housing seat (20), which are at a lower height than the rods (105) of the pair of rods (105) and are configured to support the skewer (S) at the bottom at least when the abutment element passes from the first position to the second position.

7. Skewer machine (10) according to claim 6, wherein the extraction station comprises a pusher device (125, 130) configured to remove the skewer (S) resting on the rods (110) of the further pair of rods (110) when the abutment element is in the second position.

8. Skewer machine (10) according to claim 5, wherein the conveyor (60) of the forming trays (15) comprises a first stretch (70) in which the forming trays (15) are with the housing seat (20) with concavity facing upwards, a second stretch (75) in which the trays are with the housing seat (20) with concavity facing downwards, and a reversing stretch (80) interposed between the first stretch (70) and the second stretch (75), and wherein the extraction station (95) comprises a guide (120) placed at the reversing stretch (80) and configured to prevent the skewers (S) from completely coming out of the housing grooves (20).

9. Skewer machine (10) according to claim 8, wherein the guide comprises a pair of curvilinear elements (120) which follow the trajectory defined by the forming trays (15) in the movement by the conveyor (60) of the forming trays (15) and are positioned laterally and externally to the housing grooves (20) of the forming trays (15).

10. Skewer machine (10) according to claims 1 and 2, comprising an automated sorting station (135) of the skewers (S), which is placed downstream of the extraction station of the skewers (S) and is adapted to sort the skewers (S) and to position the sorted skewers (S) directly in containers (140), and wherein the pusher device (125, 130) is configured to move the skewer (S) from the abutment element (105, 110) of the extraction station to a conveyor (155) of the sorting station (95).
